# EUROPÄISCHE PATENTSCHRIFT

(11) **EP 1 016 263 B1**
(45) Veröffentlichungstag und Bekanntmachung des Hinweises auf die Patenterteilung: **12.12.2001**
(21) Anmeldenummer: 98940042.9
(22) Anmeldetag: 08.09.1998
(51) Int. Cl.: H04M 15/00, H04M 17/00

(54) **VERRECHNUNGSSYSTEM UND VERRECHNUNGSVERFAHREN IN EINEM TELEKOMMUNIKATIONSNETZ**
BILLING PROCESS AND SYSTEM IN A TELECOMMUNICATION NETWORK
SYSTEME ET PROCEDE DE TARIFICATION DANS UN RESEAU DE TELECOMMUNICATION

(30) Priorität: 15.09.1997 CH 217597
(43) Veröffentlichungstag der Anmeldung: 05.07.2000
(73) Patentinhaber: Swisscom Mobile AG, 3050 Bern (CH)
(72) Erfinder: RITTER, Rudolf, CH-3052 Zollikofen (CH); HEUTSCHI, Walter, CH-3303 Jegensdorf (CH)
(74) Vertreter: BOVARD AG - Patentanwälte
(86) Internationale Anmeldenummer: CH9800384
(87) Internationale Veröffentlichungsnummer: WO9914933

(56) Entgegenhaltungen:
- EP-A- 0 689 368
- WO-A-95/20298
- WO-A-97/21299
- US-A- 5 027 388
- US-A- 5 345 595

## Beschreibung

Die vorliegende Erfindung betrifft ein Verrechnungssystem und ein Verrechnungsverfahren, um Verbindungen in einem Telekommunikationsnetz zu verrechnen.

Im Telekommunikationsbereich wird unterschieden zwischen dem Verkehrsanbieter, dem Serviceanbieter und dem Benutzer. Der Verkehrsanbieter, im allgemeinen ein Netzoperator, schafft mit der Infrastruktur (Fix und/oder Mobil) die Voraussetzung für die Verkehrserzeugung. Der Serviceanbieter kann der Netzoperator selbst sein oder oder ein Kunde dieses Netzoperators, zum Beispiel ein Dienstanbieter, zum Beispiel eine Bank, der Airtime von einem Operator bezieht und als Value Added Service an den Benutzer verkauft. Der Benutzer ist ein Kunde eines Serviceanbieters. Er benutzt ein Telekommunikationssystem und bezahlt dafür dem Serviceanbieter Gebühren oder er bezieht eine Dienstleistung (Value Added Service) bei einem Dienstanbieter.

Der Telekommunikationsablauf lässt sich grundsätzlich in zwei Segmente aufteilen : Signalisierung und Verkehr. Die vorliegende Erfindung bezieht sich auf die Tarifierung von beiden Segmenten. Da aber die Signalisierung heute kaum verrechnet wird, wird im folgenden nur die Tarifierung des Verkehrssegmentes beschrieben. Das Verkehrssegment kann in folgende Teile zerlegt werden :

Der Carrier kanalisiert den Verkehr zwischen den Netzen.

Der Operator betreibt das Kommunikationsnetz, zum Beispiel ein GSM-, UMTS- oder IN-Netz. Er ist ein Kunde des Carriers.

Der Serviceanbieter ist ein Kunde des Operators und bezieht die Kommunikationsleistung vom ihm.

Der Benutzer ist der Endverbraucher und ist Kunde eines Serviceanbieters.

Die Tarifierung von Verkehrsobjekten, zum Beispiel Verbindungen zwischen Carrier und Operator, erfolgt mit dem unter dem Begriff Interconnection bekannten Verfahren. Zwischen Operator und Serviceanbieter kann grundsätzlich der gleiche Prozess angewendet werden oder eine bekannte Variante über ein klassisches Billingsystem. Zwischen dem Serviceanbieter und dem Benutzer wird traditionell ein klassisches Billingsystem eingesetzt, zum Beispiel ein auf sogenanntes CDR (Call Detail Records) basierendes System. Jede Verbindung wird detailliert abgerechnet.

Diese konventionellen Billingsysteme sind sehr abhängig von den Infrastruktursystemen. Es entstehen dadurch komplexe Systemvernetzungen. Die Rechnungszustellung erfolgt heute zum grössten Teil auf Papier, via Postweg. Da andererseits die Verkehrstarife tendenziell massiv sinken, wird das Kostenverhältnis Ertrag zu Billingaufwand schlechter. Solche konventionellen Billingsysteme erlauben ausserdem im allgemeinen keine benutzungsabhängigen Kostenermässigungen. Ausserdem können die Systeme nur schlecht mit den wichtiger werdenden Prepaid Services kombiniert werden.

Eine Verrechnung und Abbuchung von Verbindungen während oder spätestens gleich nach der Verbindung wird immer öfter verlangt, zum Beispiel in Prepaid Systems. Diese Bedürfnisse verlangen aber, dass das Verrechnungssystem alle Angaben, die den Preis einer Verbindung bestimmen, in Echtzeit verarbeitet. Zum Beispiel muss das Verrechnungssystem gleich nach der Verbindung alle zeitlichen und geographischen Angaben über die zu verrechnende Verbindung, zum Beispiel die Dauer der Verbindung, die Tageszeit, der Ort des Anrufenden und des Angerufenen, eventuelle Discounts usw. während oder kurz nach der Verbindung sammeln und verarbeiten. Dadurch wird das Verrechnungssystem während der Spitzenzeit stark belastet und muss überdimensioniert werden. Je nachdem, wo die Verrechnung ausgeführt ist, zum Beispiel in einer Betriebszentrale oder einer SIM-Karte im Endgerät, ist es ausserdem manchmal schwierig bis unmöglich, am Ende der Verbindung über alle benötigten Angaben zu verfügen. In Mobilfunksystemen beispielsweise sind die für die Verrechnung eines Gesprächs benötigten CDR erst ca. 15 Minuten nach Ende des Gesprächs verfügbar.

Das Ziel der Erfindung ist deshalb, die technische Voraussetzung für ein neues Verrechnungssystem und ein neues Verrechnungsverfahren zu schaffen, um diese Nachteile zu vermeiden.

Dieses Ziel wird mit einem Verrechnungssystem und -verfahren erzielt, um Nutzungsbeträge, die durch die Benutzung eines digitalen Telekommunikationsnetzes durch einen Kunden (Operator, Serviceanbieter oder Benutzer) entstehen, zu ermitteln, die die Merkmale der unabhängigen Ansprüche enthalten.

Insbesondere wird dieses Ziel durch ein Verrechnungsverfahren erzielt, in welchem die Nutzungsbeträge aus einem in einem ersten Speicherbereich gespeicherten dynamischen Kundenprofil ermittelt werden. Das Kundenprofil wird aus einem oder mehreren Zufallsvariablen von früheren Verbindungen des Kunden abgeleitet. Nach neuen Verbindungen des Kunden wird das gespeicherte Kundenprofil dynamisch wieder abgeleitet.

Dadurch kann während oder sogar vor der Verbindung eine Prognose über die Verbindungskosten gestellt werden. Diese Verrechnungskosten können gegebenenfalls gleich berechnet und abgebucht werden.

In einer einfachen Ausführungsform der Erfindung ist das Kundenprofil einfach ein aus den früheren Verbindungen des Kunden gewonnener Durchschnittspreis pro Gespräch. Vorzugsweise enthält aber das Kundenprofil mehr statistische Informationen über das Verhalten des Kunden, zum Beispiel Informationen über die Dauer der Verbindungen des Kunden. Das Kundenprofil kann beispielsweise die Anzahl von Verbindungen in vordefinierten Dauerklassen enthalten, und/oder den Mittelwert und die Streuung der Verbindungsdauer des Kunden. Dadurch kann beispielsweise der Betrag für die nächste Verbindung auch aus Tendenzen ermittelt werden.

Das Kundenprofil kann auch mehrdimensionale Funktionen von Zufallsvariablen von früheren Verbindungen des Kunden des digitalen Telekommunikationsnetzes enthalten. Zum Beispiel kann das Kundenprofil Angaben über die durchschnittliche Verbindungsdauer eines Kunden als Funktion der Tageszeit enthalten. Wenn das Verrechnungssystem dann merkt, dass ein bestimmter Kunde oft länger am Abend als am Vormittag oder länger am Sonntag als in der Arbeitswoche telefoniert, werden die nächsten Verbindungen dann entsprechend als Funktion der Tageszeit und/oder des Wochentages tarifiert.

Die Nutzungsbeträge werden auch aus einem in einem zweiten Speicherbereich gespeicherten dynamischen Gesamtkundenprofil ermittelt. Das Gesamtkundenprofil wird aus einem oder mehreren Zufallsvariablen von früheren Verbindungen von mindestens einer Gruppe von Benutzem des digitalen Telekommunikationsnetzes abgeleitet und wird dynamisch angepasst. Aus dem Gesamtkundenprofil kann die statistische Systembelastung gewonnen werden, von der die Nutzungsbeträge abhängig sind. Die Zufallsvariablen, die zur Ableitung des Gesamtkundenprofils benutzt werden, enthalten vorzugsweise die Verbindungszeit, die Tageszeit, den Wochentag, und/oder geographische Eigenschaften von früheren Verbindungen.

Auf diese Weise können die Nutzungsbeträge, die für neue Verbindungen entstehen, bei der Erstellung der Verbindung aus dem gespeicherten dynamischen Kundenprofil ermittelt werden und gleich abgebucht werden. Vorzugsweise werden diese Beträge aber vorher an den Benutzer mitgeteilt, wobei der Benützer die Möglichkeit hat, die Herstellung der Verbindung zu unterbrechen, wenn ihm der Preis zu hoch ist.

Die Nutzungsbeträge können auf diese Weise in einem Telekommunikationsendegerät, zum Beispiel in einem festen oder mobilen Telefon, ermittelt werden. Das Endgerät enthält in diesem Fall einen dritten Speicherbereich, der einen vorbezahlten Geldbetrag speichert, sowie Mittel, um den Geldbetrag abzubuchen oder nachzuladen. Diese Möglichkeit ist schon im GSM-Mobilgerät unter dem Begriff Advice-of-Charge (AOC) vorhanden. Das erfindungsgemässe Endgerät enthält ausserdem einen Prozessor, um aus einem oder mehreren Zufallsvariablen von früheren Verbindungen des Kunden ein dynamisches Kundenprofil zu ermitteln und in einem ersten Speicherbereich zu speichern, und um aus dem gespeicherten dynamischen Kundenprofil den Betrag für neue Verbindungen zu ermitteln und um diesen Betrag bei der Erstellung einer Verbindung direkt aus dem dritten Speicherbereich abzubuchen. Die ermittelten Beträge für neue vorgesehene Verbindungen können dann auf der Anzeige des Geräts angezeigt werden. Die Nutzungsbeträge sind vorzugsweise auch von einem in einem zweiten Speicherbereich gespeicherten statistischen dynamischen Gesamtkundenprofil abhängig, wobei das Gesamtkundenprofil aus einem oder mehreren Zufallsvariablen von früheren Verbindungen von mindestens einer Gruppe von Benutzern des digitalen Telekommunikationsnetzes abgeleitet wird.

Das Endgerät kann zum Beispiel eine Chipkarte enthalten, zum Beispiel eine SIM-Karte, die Speichermittel und Verarbeitungsmittel enthält, um das erfindungsgemässe Verrechnungsverfahren zu realisieren. Das erfindungsgemässe Verfahren kann aber genau so gut in einem Verrechnungssystem, das zur Ermittlung von Telekommunikationsnetz-Nutzungsbeträgen bestimmt ist, realisiert werden, oder in irgendeiner programmierbaren Einrichtung. Die programmierbare Einrichtung wird vorzugsweise mit einem auf einem Datenträger gespeicherten Computerprogramm gesteuert.

Gemäss der Erfindung wird der Nutzungsbetrag für eine Verbindung oder eine Signalisierung nicht durch die Zufallsvariablen dieser Verbindung, wie Zeitdauer, Tageszeit oder Distanz bestimmt, sondern durch ein Kundenprofil, das anhand von Zufallsvariablen (aller) früherer Verbindungen des Kunden ermittelt worden ist. Zum Beispiel können die Kosten der nächsten Verbindung anhand des Mittelwertes der Zeitdauer aller früheren Verbindungen des Kunden festgelegt werden. Die Kosten der Verbindung können auf diese Weise schon während einer Verbindung oder sogar vor der Herstellung der Verbindung erstellt werden, ohne das Ende der Verbindung abzuwarten. Die Kosten können zum Beispiel einer Prepaid-Karte oder einem Bankkonto belastet werden. Der Signalisationsverkehr kann somit vereinfacht werden, da die Signalisationsinformationen nicht in der Echtzeit übermittelt werden müssen, sondern später mitgeteilt werden können, um danach die Änderungen im Kundenprofil des Benutzers vornehmen zu können.

Der Nutzungsbetrag hängt ausserdem auch vorzugsweise von einem mit Hilfe von Zufallsvariablen von (allen) früheren Verbindungen aller Benutzer ermittelten dynamischen Gesamtkundenprofil ab, oder mindestens von einer Gruppe von Benutzern. Die Tarifierung kann auch dynamisch an die Belastung des Systems angepasst werden.

Dieses Verfahren kann nicht nur zwischen einem Serviceanbieter und dem Benutzer eingesetzt werden, sondern auch zwischen einem Dienstanbieter und einem Benutzer, oder zwischen einem Carrier und einem Operator, oder zwischen einem Operator und einem Serviceanbieter. In diesem letzten Fall wird der Serviceanbieter als Kunde des Operators betrachtet, und das Kundenprofil wird aus einer oder mehreren Zufallsvariablen von früheren Verbindungen des Serviceanbieters abgeleitet. Die Nutzungsbeträge, die dem Serviceanbieter verrechnet werden, werden in diesem Fall periodisch aus diesem Kundenprofil ermittelt.

Obwohl in der folgenden Beschreibung nur ein Ausführungsbeispiel im Spezialfall der Tarifierung in einem GSM-Netz näher beschrieben wird, kann das erfindungsgemässe Verfahren auch für ein anderes Mobilfunknetz, zum Beispiel für ein UMTS- oder IN-Netz oder für ein Fixnetz, Inter-, Intra-, Extranetz oder für sonstige Telekommunikationssysteme eingesetzt werden.

Die Erfindung wird mithilfe der als Beispiel gegebenen Beschreibung besser verständlich, und durch die anliegenden Figuren veranschaulicht, welche folgendes zeigen:

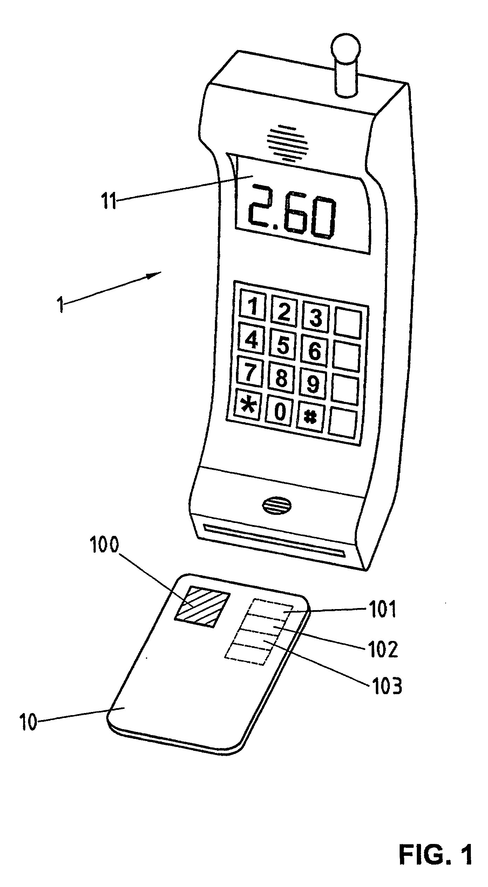

- die Figur 1 eine perspektivische Darstellung eines Endgeräts, das das erfindungsgemässe Verfahren verwenden kann,
- die Figur 2 die statistische Gesamtkundenverkehrsdistribution, die in einem zweiten Speicherbereich gespeichert werden kann,
- die Figur 3 die statistische Kundenverkehrsdistribution, die in einem ersten Speicherbereich gespeichert werden kann,
- die Figur 4 die Gesamtsystembelastung und die Belastung durch den Kunden, beide als Funktion der Tageszeit
- die Figur 5 ein Flussdiagramm des Verrechnungsverfahrens.

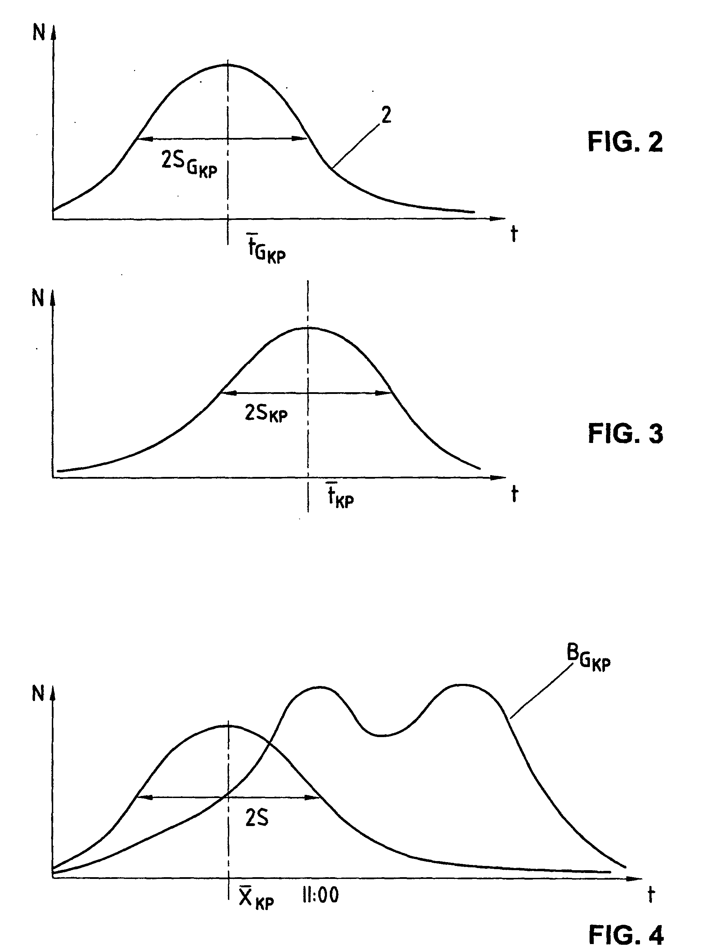

Die Figur 2 zeigt die statistische Gesamtkundenverkehrsdistribution, die aus allen Verbindungen aller Kunden hergeleitet wird. Die Kurve zeigt die Anzahl von Verbindungen als Funktion der Dauer der Verbindungen. Aus dieser Kurve lassen sich der Mittelwert t_{Gkp} und die Streuung S_{Gkp} ermitteln, zum Beispiel ein Mittelwert t_{Gkp} von 80 sec und eine Streuung S_{Gkp} von 35 sec. Innerhalb t_{Gkp} + 2S_{Gkp} sind 95% aller Verbindungen im zeitlichen Verhalten erfasst.

Andere Zufallsvariablen von Verbindungen der Kunden können, je nach Anwendung, einzeln oder gemeinsam eingesetzt werden, zum Beispiel die Verbindungszeiten, die Tageszeiten, der Wochentag, die Feiertage, die Distanzen (national/national, national/international, international/international) und/oder der Ort (vom A-Teilnehmer und/oder vom B-Teilnehmer). Das Gesamtkundenprofil, das zum Beispiel in einem Speicherbereich gespeichert werden kann, beinhaltet vorzugsweise eine oder mehrere statistische Grössen wie Mittelwert, Streuung, Klasse, gleitender Mittelwert, Verteilung in vordefinierte Klassen usw. der Gesamtkundenverkehrsdistribution. Das Gesamtkundenprofil wird vorzugsweise dynamisch nach jeder Verbindung oder regelmässig, beispielsweise täglich oder wöchentlich, wieder ermittelt.

Aus diesem Gesamtkundenprofil können die Ertragszahlen (mittlere Zeit pro Verbindung und mittlerer Ertrag je Verbindung) definiert werden. Diese Ertragszahlen sind für den einzelnen Servicenutzer massgebend.

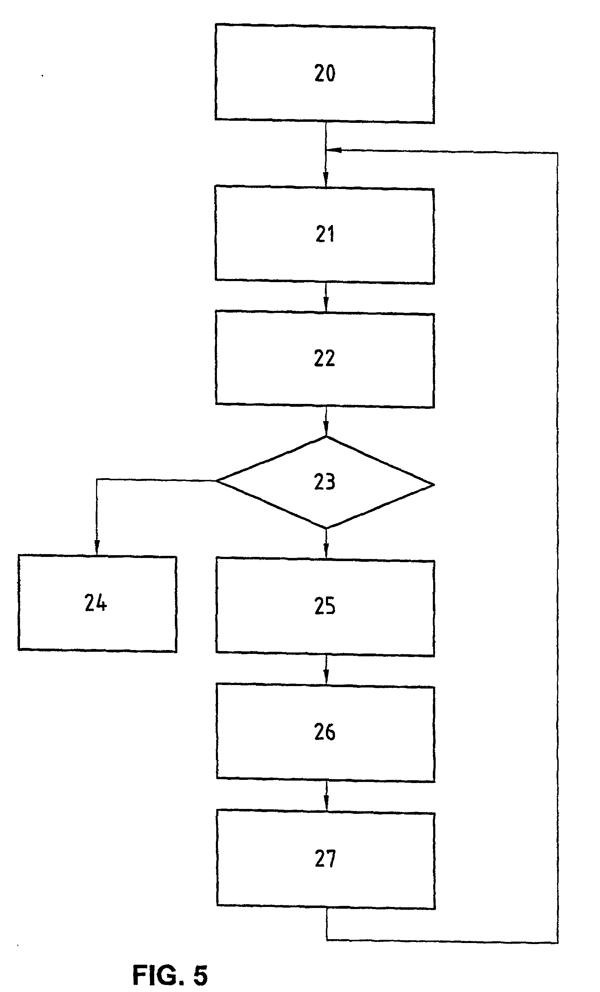

Jeder Kunde hat ein eigenes Kundenprofil. Das Kundenprofil eines neuen Kunden basiert auf dem Gesamtkundenprofil. Der zu verrechnende Betrag für eine neue Verbindung wird während oder sogar vor dieser Verbindung aus dem Kundenprofil prognostiziert und eventuell gleich verrechnet. Nach jeder Verbindung wird das Kundenprofil entsprechend einem geeigneten Algorithmus angepasst, gemäss Figur 5. Ist zum Beispiel eine eben abgeschlossene Verbindung länger oder kürzer als der Mittelwert tₖₚ, wird das statistische Kundenprofil entsprechend korrigiert. Damit sind die Beträge für die nächsten Verbindungen des Kunden korrigiert.

Die an den Kunden verrechneten Beträge werden durch das erfindungsgemässe Verfahren quasi nicht beeinflusst, zumindest nach einer genügenden Anzahl von Verbindungen und wenn die Zinsen nicht betrachtet werden. Daher ist das erfindungsgemässe Verfahren und System unabhängig von der Preispolitik des Carriers, Netzoperators oder Serviceanbieters.

Die Figur 3 zeigt die Kundenverkehrsdistribution für einen bestimmten Kunden, die aus allen Verbindungen zwischen einem Serviceanbieter und den bestimmten Benutzern (oder zwischen einem Operator und einem Serviceanbieter als Kunde) hergeleitet wird. In diesem Fall zeigt die Kurve die Anzahl Verbindungen des Kunden als Funktion der Dauer der Verbindungen. Aus dieser Kurve lässt sich das Kundenprofil mit dem Mittelwert tₖₚ und die Streuung Sₖₚ ermitteln. Das Kundenprofil, das auch in einem Speicherbereich gespeichert werden kann, beinhaltet vorzugsweise eine oder mehrere statistischen Grössen, wie Mittelwert, Streuung, Klasse, gleitender Mittelwert, Verteilung in vordefinierte Klassen usw. der Kundenverkehrsdistribution. In der einfachsten Ausführungsform enthält das Kundenprofil nur den durchschnittlichen Preis pro Verbindung für diesen Kunden. In einer bevorzugten Ausführungsform enthält das Kundenprofil ausserdem Angaben über die Dauer der Verbindungen dieses Kunden, zum Beispiel den Mittelwert und die Streuung dieser Dauer. Vorzugsweise enthält aber das Kundenprofil mehr Informationen über diese Dauer, zum Beispiel auch die Verteilung in vordefinierte Klassen, und über andere Zufallsvariablen von Verbindungen, so dass die Kosten für die nächsten Verbindungen zuverlässig prognostiziert werden können. Vorzugsweise werden diese Angaben mehrdimensional registriert, so dass zum Beispiel das Kundenprofil Angaben über das gewöhnliche Verhalten des Kundens als Funktion der Tageszeit und/oder des Wochentages enthält, um beispielsweise die dynamische Tarifierung am Vormittag anders als am Nachmittag durchzuführen, entsprechend den Gewohnheiten des Kunden.

Wird das Verrechnungsverfahren direkt in einem Endgerät, zum Beispiel in einem Mobiltelefon 1, durchgeführt, kann das dynamische Kundenprofil in einem ersten Speicherbereich 101, vorzugsweise auf der SIM-Chipkarte 10, gespeichert werden. Das Gesamtkundenprofil kann zum Beispiel in einem zweiten Speicherbereich 102 gespeichert werden. Der Chipkartenprozessor 100 ermittelt nach jeder neuen Verbindung das dynamische Kundenprofil in Abhängigkeit von einem oder mehreren Zufallsvariablen, und ermittelt aus dem gespeicherten dynamischen Kundenprofil und eventuell aus dem Gesamtkundenprofil den Nutzungsbetrag für neue Verbindungen.

Falls die Karte einen dritten Speicherbereich enthält, der einen vorbezahlten Geldbetrag speichert, kann dieser Nutzungsbetrag vor oder während der Verbindung direkt aus diesem Speicherbereich abgebucht werden. In einer Variante wird der Nutzungsbetrag einem Bankkonto belastet, oder, wenn die Karte über Trusted Third Party Funktionen verfügt, auf der Karte elektronisch signiert und verschlüsselt und auf einem entsprechenden Konto abgebucht. Das ist zum Beispiel möglich, wenn die Karte eine GSM-SIM-Karte ist, die über die Funktionen des GSM 11.14 und des im Patentdokument EP689368 beschriebenen Verfahrens verfügt. Mit diesen Funktionen ist es möglich, Zeitelemente von der Karte zu lesen, die als Basis für die Berechnung des Kundenprofils dienen.

Das Kundenprofil wird vorzugsweise dynamisch nach jeder Verbindung oder regelmässig korrigiert oder angepasst. Es ist aber nicht nötig, dass dieses Kundenprofil in Echtzeit angepasst wird. Dadurch kann das Verrechnungssystem das Ermitteln des statistischen Kundenprofils erst durchführen, wenn es weniger belastet wird, zum Beispiel ausserhalb der Spitzenzeiten, und braucht nicht für die Verarbeitung von Verbindungsangaben in Echtzeit überdimensioniert zu werden. Diese Anpassung kann zum Beispiel auf Basis von im GSM-Bereich unter dem Begriff CDR (Call Detail Records) bekannten Verbindungsangaben, die heute auch zur Abrechnung in den verschiedenen Ebenen verwendet werden, gemacht werden ; die Verbindungsangaben brauchen aber nicht während der Verbindung an das Verrechnungssystem übermittelt zu werden.

Die Verrechnung kann in einem Verrechnungssystem erfolgen, das zum Beispiel in einer Betriebszentrale, im Endgerät oder in einer SIM-Karte im Telekommunikationsnetz enthalten ist.

Statistisch lässt sich auch in einem System die über den Tag entstehende durchschnittliche Systembelastung B_{Gkp} ermitteln. Die Figur 4 zeigt die Anzahl der Verbindungen von allen Servicenutzern als Funktion der Zeit (Tagesbelastung des Systems). Ein Tagesdiscount kann beispielsweise aus dieser Systembelastung abgeleitet werden und über die Kundenseite die Systemnutzung steuern. Zum Beispiel kann der zu bezahlende Verkehrsbetrag nach Systemauslastung moduliert werden. Wenn zum Beispiel aus dem Kundenprofil ermittelt wird, dass der Kunde durchschnittlich um Zeit xₖₚ telefoniert, mit einer kleinen Streuung S, kann er von einem Tagesdiscount profitieren, wenn xₖₚ einer Zeit mit einer kleinen Systembelastung entspricht.

Analog diesem Prozess kann der zu bezahlende Verkehrsbetrag auch für alle anderen oben erwähnten Zufallsvariablen ermittelt werden. Kundenprofile einzelner Kunden können zu Gruppenprofilen von Freunden und Familien, Firmen, usw. zusammengefasst werden.

Statistische Discounts (Verschieben der statistischen Elemente auf der Zeitachse) können auch angewendet werden.

Die Erfindung kann zum Beispiel von einem Serviceanbieter eingesetzt werden, der Services ausserhalb der Telekommunikation verkauft (z.B. ein Finanzdienstleister), und Verbindungen als Value Added Service verkauft. Mit der vorliegenden Erfindung wird die Verrechnung von Abonnements und Verkehrskosten an Servicenutzer viel einfacher.

Die vorliegende Erfindung erlaubt daher, Verbindungen im voraus zu debitieren (Debitsysteme statt gewöhnliche Kreditverrechnungssysteme). Damit können die Betrugsmöglichkeiten massiv gesenkt werden.

Text des Flussdiagramms auf Figur 5
- 20: Speichern des Gesamtkundenprofiles als Kundenprofil
tₖₚ := t_{gkp}
Sₖₚ .= S_{gkp}
- 21: Erstellen einer Verbindung
- 22: Verrechnung des Nutzungsbetrags aus dem Kundenprofil
- 23: Nutzungsbetrag > verfügbarer Geldbetrag ?
- 24: Verbindung nicht hergestellt
- 25: Verbindung hergestellt; Ende der Verbindung
- 26: Ermittlung von Zufallsvariablen der Verbindung: Dauer t, usw.
- 27: Ableitung eines neuen Kundenprofils, mit Zufallsvariablen der letzten Verbindung
tₖₚ := f(tₖₚ, t),..

## Patentansprüche

1. Verrechnungsverfahren, um Nutzungsbeträge, die durch die Benutzung eines digitalen Telekommunikationsnetzes entstehen, zu ermitteln, **dadurch gekennzeichnet, dass** der für eine Verbindung an einen Kunden verrechnete Nutzungsbetrag aus statistischen Eigenschaften von früheren Verbindungen dieses Kunden ermittelt wird.

2. Verrechnungsverfahren, gemäss Anspruch 1, **dadurch gekennzeichnet, dass** der Nutzungsbetrag, der für eine Verbindung an einen neuen Kunden des Telekommunikationsnetzes verrechnet wird, aus statistischen Eigenschaften von früheren Verbindungen von mindestens einer Gruppe von Kunden, zum Beispiel von allen Benutzern des digitalen Telekommunikationsnetzes, ermittelt wird.

3. Verrechnungsverfahren, gemäss einem der Ansprüche 1 oder 2, **dadurch gekennzeichnet, dass** die statistischen Eigenschaften von früheren Verbindungen des Kunden, ein in einem ersten Speicherbereich gespeichertes dynamisches Kuhdenprofil sind, welches aus einer oder mehreren Zufallsvariablen von früheren Verbindungen dieses Kunden abgeleitet wird, und welches nach neuen Verbindungen des Kunden dynamisch wieder abgeleitet wird.

4. Verrechnungsverfahren gemäss Anspruch 2, **dadurch gekennzeichnet, dass** die statistischen Eigenschaften von früheren Verbindungen von mindestens einer Gruppe von Kunden, ein in einem zweiten Speicherbereich gespeichertes dynamisches Gesamtkundenprofil sind, welches aus einer oder mehreren Zufallsvariablen von früheren Verbindungen der Gruppe von Kunden abgeleitet wird.

5. Verrechnungsverfahren gemäss Anspruch 3, **dadurch gekennzeichnet, dass** das Kundenprofil einen proportionalen Wert zum durchschnittlichen Preis pro Verbindung des Kunden enthält

6. Verrechnungsverfahren gemäss Anspruch 3, **dadurch gekennzeichnet, dass** das Kundenprofil einen proportionalen Wert zur durchschnittlichen Verbindungszeit des Kundens enthält.

7. Verrechnungsverfahren gemäss Anspruch 3, **dadurch gekennzeichnet, dass** das Kundenprofil die Anzahl von Verbindungen des Kunden in vordefinierten Dauerklassen enthält.

8. Verrechnungsverfahren gemäss Anspruch 3, **dadurch gekennzeichnet, dass** das Kundenprofil auch mehrdimensionale Funktionen von Zufallsvariablen von früheren Verbindungen des Kunden des digitalen Telekommunikationsnetzes enthält.

9. Verrechnungsverfahren gemäss Anspruch 3, **dadurch gekennzeichnet, dass** die Zufallsvariablen, die zur Ableitung des Kundenprofils benutzt werden, die Verbindungszeit, die Tageszeit, den Wochentag, und/oder geographische Eigenschaften früherer Verbindungen enthalten.

10. Verrechnungsverfahren gemäss Anspruch 3, **dadurch gekennzeichnet, dass** die Nutzungsbeträge für neue Verbindungen von der aus dem Gesamtkundenprofil gewonnenen statistischen Systembelastung abhängig sind.

11. Verrechnungsverfahren gemäss Anspruch 3, **dadurch gekennzeichnet, dass** die Nutzungsbeträge, die für neue Verbindungen entstehen, bei der Erstellung der Verbindung aus dem gespeicherten dynamischen Kundenprofil ermittelt und direkt abgebucht werden.

12. Verrechnungsverfahren gemäss Anspruch 3, **dadurch gekennzeichnet, dass** die Beträge, die für vorgesehene neue Verbindungen entstehen werden, vor der Erstellung der Verbindung ermittelt und an den Kunden mitgeteilt werden, wobei der Kunde die Möglichkeit hat, die Erstellung der Verbindung zu unterbrechen, wenn ihm der Preis zu hoch ist.

13. Telekommunikationsendegerät (1), enthaltend :
einen dritten Speicherbereich (103), der einen vorbezahlten Geldbetrag speichert,
einen Prozessor (100), der den Geldbetrag abbuchen oder nachladen kann,
**dadurch gekennzeichnet, dass** der Prozessor ausserdem ein dynamisches Kundenprofil aus einer oder mehreren Zufallsvariablen von früheren Verbindungen des Kundens ermitteln und in einem ersten Speicherbereich (101) speichern kann,
und dass der Prozessor den Betrag für neue Verbindungen aus dem gespeicherten dynamischen Kundenprofil ermitteln und direkt aus dem dritten Speicherbereich (103) bei der Erstellung einer Verbindung abbuchen kann.

14. Telekommunikationsendegerät gemäss dem vorhergehenden Anspruch, **dadurch gekennzeichnet, dass** es ausserdem die von aus dem gespeicherten Kundenprofil ermittelten Beträge für neue vorgesehene Verbindungen anzeigen kann.

15. Telekommunikationsendegerät gemäss Anspruch 14, **dadurch gekennzeichnet, dass** der Betrag für neue Verbindungen aus einem in einem zweiten Speicherbereich (102) gespeicherten statistischen dynamischen Gesamtkundenprofil ermittelt wird, das aus einer oder mehreren Zufallsvariablen von früheren Verbindungen von mindestens einer Gruppe von Kunden des digitalen Telekommunikationsnetzes abgeleitet wird, wobei das gespeicherte Gesamtkundenprofil dynamisch angepasst wird.

16. Telekommunikationsendegerät gemäss Anspruch 14, **dadurch gekennzeichnet, dass** die Zufallsvariablen, die zur Ableitung des Kundenprofils benutzt werden, die Verbindungszeit, die Tageszeit, den Wochentag, und/oder geographische Eigenschaften von früheren Verbindungen enthalten.

17. Telekommunikationsendegerät gemäss Anspruch 14, **dadurch gekennzeichnet, dass** die Beträge für neue Verbindungen von der aus dem Gesamtkundenprofil gewonnenen statistischen Systembelastung abhängig sind.

18. Chipkarte (10), die in einem Telekommunikationsgerät eingesetzt werden kann, enthaltend:
einen ersten Speicherbereich (101), der ein dynamisches Kundenprofil speichert, das aus einer oder mehreren Zufallsvariablen früherer Verbindungen des Besitzers der Chipkarte abgeleitet wird,
einen Prozessor (100), um das dynamische Kundenprofil nach einer neuen Verbindung wieder zu ermitteln, und um aus dem gespeicherten dynamischen Kundenprofil den Nutzungsbetrag für neue Verbindungen zu ermitteln.

19. Chipkarte gemäss dem vorhergehenden Anspruch, durch folgende zusätzliche Merkmale gekennzeichnet:
einen dritten Speicherbereich (103), der einen vorbezahlten Geldbetrag speichert,
Mittel (100), um den Geldbetrag abzubuchen oder nachzuladen,
Mittel (100), um den aus dem gespeicherten dynamischen Kundenprofil ermittelten Betrag für neue Verbindungen direkt aus dem dritten Speicherbereich abzubuchen.

20. Chipkarte gemäss Anspruch 18, **dadurch gekennzeichnet, dass** der Betrag für neue Verbindungen aus einem in einem zweiten Speicherbereich (102) gespeicherten statistischen dynamischen Gesamtkundenprofil ermittelt wird, das aus einer oder mehreren Zufallsvariablen früherer Verbindungen von mindestens einer Gruppe von Kunden abgeleitet wird, wobei das gespeicherte Gesamtkundenprofil dynamisch angepasst wird.

21. Chipkarte gemäss Anspruch 18, **dadurch gekennzeichnet, dass** die Zufallsvariablen, die zur Ableitung des Kundenprofils benutzt werden, die Verbindungszeit, die Tageszeit, den Wochentag, und/oder geographische Eigenschaften früherer Verbindungen enthalten.

22. Chipkarte gemäss Anspruch 18, **dadurch gekennzeichnet, dass** die Beträge für neue Verbindungen von der aus dem Gesamtkundenprofil gewonnenen statistischen Systembelastung abhängig sind.

23. Verrechnungssystem, das zur Ermittlung von Telekommunikationsnetz-Nutzungsbeträgen bestimmt ist, enthaltend :
einen ersten Speicherbereich (101), der für mindestens einen Kunden des Telekommunikationsnetzes ein dynamisches Kundenprofil speichert, das aus einer oder mehreren Zufallsvariablen früherer Verbindungen des Kunden abgeleitet wird.
Mittel, um bei jeder neuen Verbindung eine oder mehrere Zufallsvariablen zu bestimmen,
Mittel (100), um das dynamische Kundenprofil in Abhängigkeit von der oder den bestimmten Zufallsvariablen wieder zu berechnen,
Mittel (100), um aus dem gespeicherten dynamischen Kundenprofil den Nutzungsbetrag zu ermitteln und an den Kunden zu verrechnen.

24. Verrechnungssystem gemäss Anspruch 23, **dadurch gekennzeichnet, dass** der Nutzungsbetrag aus in einem zweiten Speicherbereich (102) gespeicherten statistischen dynamischen Gesamtkundenprofil ermittelt wird, der aus einer oder mehreren Zufallsvariablen früherer Verbindungen von mindestens einer Gruppe von Kunden abgeleitet wird, wobei das gespeicherte Gesamtkundenprofil dynamisch angepasst wird.

25. Verrechnungssystem gemäss Anspruch 23, **dadurch gekennzeichnet, dass** die Zufallsvariablen, die zur Ableitung des Kundenprofils benutzt werden, die Verbindungszeit, die Tageszeit, den Wochentag, und/oder geographische Eigenschaften früherer Verbindungen enthalten.

26. Verrechnungssystem gemäss Anspruch 23, **dadurch gekennzeichnet, dass** der Nutzungsbetrag von der aus dem Gesamtkundenprofil gewonnenen statistischen Systembelastung abhängig ist.

27. Datenträger, der mit einem Computerprogramm programmiert ist, das benutzt werden kann, um eine programmierbare Einrichtung (100) zu steuern, enthaltend:
Mittel, um für mindestens einen Kunden eines Telekommunikationsnetzes ein dynamisches Kundenprofil, das aus einer oder mehreren Zufallsvariablen früherer Verbindungen des Kunden des digitalen Telekommunikationsnetzes abgeleitet wird, in einem ersten Speicherbereich (101) zu speichern,
Mittel, um bei jeder neuen Verbindung eine oder mehrere statistische Eigenschaften zu bestimmen,
Mittel, um das dynamische Kundenprofil in Abhängigkeit von der oder den bestimmten Zufallsvariablen wieder zu ermitteln,
Mittel, um aus dem gespeicherten dynamischen Kundenprofil einen Nutzungsbetrag zu ermitteln.

28. Datenträger gemäss dem vorhergehenden Anspruch, **dadurch gekennzeichnet, dass** der Nutzungsbetrag aus in einem zweiten Speicherbereich (102) gespeicherten statistischen dynamischen Gesamtkundenprofil ermittelt wird, der aus einer oder mehreren Zufallsvariablen früherer Verbindungen von mindestens einer Gruppe von Kunden abgeleitet wird, wobei das gespeicherte Gesamtkundenprofil dynamisch angepasst wird.

29. Datenträger gemäss Anspruch 27, **dadurch gekennzeichnet, dass** die Zufallsvariablen, die zur Errechnung des Kundenprofils benutzt werden, die Verbindungszeit, die Tageszeit, den Wochentag, und/oder geographische Eigenschaften früherer Verbindungen enthalten.

30. Datenträger gemäss Anspruch 27, **dadurch gekennzeichnet, dass** die Beträge für neue Verbindungen von der aus dem Gesamtkundenprofil gewonnenen statistischen Systembelastung abhängig sind.

## Claims

1. Billing method to determine usage fees which arise through the use of a digital telecommunications network, **characterised in that** the usage fee billed to the customer for a connection is determined from statistical characteristics of previous connections of this customer.

2. Billing method according to claim 1, **characterised in that** the usage fee charged to a new customer of the telecommunications network for a connection is determined from statistical characteristics of previous connections of at least one group of users, for example of all users of the digital telecommunications network.

3. Billing method according to one of the claims 1 or 2, **characterised in that** the statistical characteristics of previous connections of the customer are a dynamic client profile stored in a first memory area, which profile is derived from one or multiple random variables of previous connections of this customer, and which will be dynamically derived again after new connections of the customer.

4. Billing method according to claim 2, **characterised in that** the statistical features of previous connections of at least one group of customers are a dynamic overall client profile stored in a second memory area which profile is derived from one or multiple random variables of previous connections of the group of customers.

5. Billing method according to claim 3, **characterised in that** the client profile contains a value proportional to the average price per connection of the customer.

6. Billing method according to claim 3, **characterised in that** the client profile contains a value proportional to the average duration of a connection of the customer.

7. Billing method according to claim 3, **characterised in that** the client profile contains the number of connections of the customer in pre-defined classes of duration.

8. Billing method according to claim 3, **characterised in that** the client profile also contains multi-dimensional functions of random variables of previous connections of the customer of the digital telecommunications network.

9. Billing method according to claim 3, **characterised in that** the random variables used to derive the client profile include the connection duration, the time of day, the day of the week, and/or geographic characteristics of previous connections.

10. Billing method according to claim 3, **characterised in that** the usage fees for new connections are dependent on the statistical system load obtained from the overall client profile.

11. Billing method according to claim 3, **characterised in that** the usage fees for new connections are determined from the stored dynamic client profile when the connection is established and that said usage fees are charged directly.

12. Billing method according to claim 3, **characterised in that** the fees which will be determined for anticipated new connections are determined prior to establishing the connection and communicated to the customer, the customer having the possibility to interrupt the connection establishment if the price is too high for him.

13. Telecommunications terminal device (1) comprising:
a third memory area (103), storing a pre-paid amount of money,
a processor (100) which is able to debit or subsequently load the amount of money,
**characterised in that** the processor in addition determines a dynamic client profile from one or more random variables of previous connections of the customer and is able to store it in a first memory area (101),
and that the processor is able to determine the amount for new connections from the stored dynamic client profile and is able to debit it directly out of the third memory area (103) when a connection is established.

14. Telecommunications terminal device according to the preceding claim, **characterised in that**, in addition, it is able to display the amounts for new intended connections, which amounts are determined from the stored client profile.

15. Telecommunications terminal device according to claim 14, **characterised in that** the fee for new connections is determined from a statistical dynamic overall client profile stored in a second memory area (102), which overall client profile is derived from one or multiple random variables of previous connections of at least one group of customers of the digital telecommunications network, the stored overall client profile being adapted dynamically.

16. Telecommunications terminal device according to claim 14, **characterised in that** the random variables used to derive the client profile include the connection duration, the time of day, the day of the week, and/or geographic characteristics of previous connections.

17. Telecommunication terminal device according to claim 14, **characterised in that** the fees for new connections are dependent on the statistical system load obtained from the overall client profile.

18. Chipcard (10) which is able to be used in a telecommunications device, comprising:
a first memory area (101) which stores a dynamic client profile which is derived from one or multiple random variables of previous connections of the owner of the chipcard,
a processor (100) to determine the dynamic client profile again after a new connection, and to determine the usage fee for new connections from the stored dynamic client profile.

19. Chipcard according to the preceding claim, **characterised by** the following additional features:
a third memory area (103) storing a pre-paid amount of money,
means (100) to debit or subsequently load the amount of money,
means (100) to debit directly from the third memory area the fee for new connections determined from the stored dynamic client profile.

20. Chipcard according to claim 18, **characterised in that** the fee for new connections is determined from a statistical dynamic overall client profile stored in a second memory area (102), which overall client profile is derived from one or multiple random variables of previous connections of at least one group of customers of the digital telecommunications network, said overall client profile being adapted dynamically.

21. Chipcard according to claim 18, **characterised in that** the random variables used to derive the client profile include the connection duration, the time of day, the day of the week, and/or geographic characteristics of previous connections.

22. Chipcard according to claim 18, **characterised in that** the fees for new connections are dependent on the statistical system load obtained from the overall client profile.

23. Billing system, intended for the determination of telecommunications network usage fees, comprising:
a first memory area (101) storing a dynamic client profile for at least one customer of the telecommunications network, said client profile being derived from one or multiple random variables of previous connections of the customer,
means to determine one or multiple random variables with every new connection,
means (100) to calculate again the dynamic client profile depending on the random determined variable(s),
means (100) to determine the usage fee from the stored dynamic client profile and to charge said fee to the client.

24. Billing system according to claim 23, **characterised in that** the usage fee is determined from a statistical dynamic overall client profile stored in a second memory area (102), which overall client profile is derived from one or multiple random variables of previous connections of at least one group of customers, the stored overall client profile being adapted dynamically.

25. Billing system according to claim 23, **characterised in that** the random variables used to derive the client profile include the connection duration, the time of day, the day of the week, and/or geographic characteristics of previous connections.

26. Billing system according to claim 23, **characterised in that** the usage fee is dependent on the statistical system load obtained from the overall client profile.

27. Data carrier programmed by a computer program which is able to be used to control a programmable device (100), comprising:
means to store in a first memory area (101) a dynamic client profile for at least one customer of a telecommunications network, said client profile being derived from one or multiple random variables of previous connections of the customer of the digital telecommunications network,
means to determine one or multiple statistical characteristics with every new connection,
means to determine again the dynamic client profile depending on the determined random variable(s),
means to determine a usage fee from the stored dynamic client profile.

28. Data carrier according to the preceding claim, **characterised in that** the usage fee is determined from a statistical dynamic overall client profile stored in a second memory area (102), which overall client profile is derived from one or multiple random variables of previous connections of at least one group of customers, the stored overall client profile being adapted dynamically.

29. Data carrier according to claim 27, **characterised in that** the random variables used to derive the client profile include the connection duration, the time of day, the day of the week, and/or geographic characteristics of previous connections.

30. Data carrier according to claim 27, **characterised in that** the fees for new connections are dependent on the statistical system load obtained from the overall client profile.

## Revendications

1. Procédé de facturation servant à déterminer les redevances résultant de l'utilisation d'un réseau de télécommunications numérique, **caractérisé en ce que** la redevance facturée à un client pour une communication est déterminée à partir de propriétés statistiques de communications antérieures de ce client.

2. Procédé de facturation selon la première revendication, **caractérisé en ce que** la redevance facturée à un client nouveau du réseau de télécommunications pour une communication est déterminée à partir de propriétés statistiques de communications antérieures établies pour au moins un groupe de clients, par exemple tous les utilisateurs du réseau de télécommunications numérique.

3. Procédé de facturation selon la revendication 1 ou 2, **caractérisé en ce que** les propriétés statistiques de communications antérieures du client sont un profil dynamique du client, enregistré dans une première zone de mémoire et qui est établi à partir d'une ou plusieurs variables aléatoires de communications antérieures de ce client et qui est à nouveau établi de façon dynamique après de nouvelles communications de ce client.

4. Procédé de facturation selon la revendication 2, **caractérisé en ce que** les propriétés statistiques de communications antérieures d'au moins un groupe de clients sont un profil d'ensemble dynamique enregistré dans une deuxième zone de mémoire, et qui est établi à partir d'une ou plusieurs variables aléatoires de communications antérieures de ce groupe de clients.

5. Procédé de facturation selon la revendication 3, **caractérisé en ce que** le profil du client comporte une valeur proportionnelle au prix moyen de chaque communication du client.

6. Procédé de facturation selon la revendication 3, **caractérisé en ce que** le profil du client comporte une valeur proportionnelle à la durée moyenne des communications du client.

7. Procédé de facturation selon la revendication 3, **caractérisé en ce que** le profil du client comporte le nombre de communications du client dans des classes de durée définies à l'avance.

8. Procédé de facturation selon la revendication 3, **caractérisé en ce que** le profil du client comporte aussi des fonctions à plusieurs dimensions de variables aléatoires de communications antérieures du client du réseau de télécommunications numérique.

9. Procédé de facturation selon la revendication 3, **caractérisé en ce que** les variables aléatoires qui sont utilisées pour établir le profil du client comportent la durée des communications, l'heure, le jour de la semaine ou les particularités géographiques de communications antérieures, ou les unes et les autres.

10. Procédé de facturation selon la revendication 3, **caractérisé en ce que** les redevances d'utilisation pour les communications nouvelles sont fonction de la charge statistique du système obtenue à partir du profil d'ensemble du client.

11. Procédé de facturation selon la revendication 3, **caractérisé en ce que** les redevances qui apparaissent pour de nouvelles communications sont déterminées, lors de l'établissement de la communication, à partir du profil dynamique du client qui avait été enregistré, et imputées directement.

12. Procédé de facturation selon la revendication 3, **caractérisé en ce que** les montants qui apparaîtront pour des communications nouvelles prévues sont déterminés avant l'établissement de ces communications et indiqués au client, qui a la possibilité d'interrompre l'établissement des communications s'il en juge le prix trop élevé.

13. Émetteur de télécommunications (1) comprenant :
une troisième zone de mémoire (103) qui enregistre une somme d'argent payée d'avance,
un processeur (100) qui peut débiter la somme d'argent ou la recharger,
**caractérisé en ce que** le processeur est en outre en mesure d'établir un profil dynamique du client à partir d'une ou plusieurs variables aléatoires de communications antérieures de ce client et de les enregistrer dans une première zone de mémoire (101),
et **en ce que** le processeur est en mesure de déterminer le montant correspondant à de nouvelles communications à partir du profil dynamique du client qui a été enregistré et de le débiter directement de la troisième zone de mémoire (103) lors de l'établissement d'une communication.

14. Émetteur de télécommunications selon la revendication précédente, **caractérisé en ce qu'**il est en outre capable d'afficher les montants, déterminés à partir du profil du client enregistré, correspondant à de nouvelles communications prévues.

15. Émetteur de télécommunications selon la revendication 14, **caractérisé en ce que** le montant correspondant à de nouvelles communications est déterminé à partir d'un profil dynamique statistique d'ensemble du client enregistré dans une deuxième zone de mémoire (102), qui est établi à partir d'une ou plusieurs variables aléatoires de communications antérieures d'au moins un groupe de clients du réseau de télécommunications numérique, le profil dynamique d'ensemble enregistré du client faisant l'objet d'une adaptation dynamique.

16. Émetteur de télécommunications selon la revendication 14, **caractérisé en ce que** les variables aléatoires qui sont utilisées pour établir le profil du client incluent la durée de la communication, l'heure, le jour de la semaine ou des particularités géographiques de communications antérieures, ou les unes et les autres.

17. Émetteur de télécommunications selon la revendication 14, **caractérisé en ce que** les montants correspondant à de nouvelles communications sont fonction de la charge statistique du système obtenue à partir du profil d'ensemble du client.

18. Carte à puce (10) pouvant être montée dans un appareil de télécommunications et possédant :
une première zone de mémoire (101) qui enregistre un profil dynamique du client, qui est établi à partir d'une ou plusieurs variables aléatoires de communications antérieures du propriétaire de la carte à puce,
un processeur (100) qui sert à déterminer à nouveau le profil dynamique du client après une nouvelle communication et à déterminer la redevance d'utilisation pour de nouvelles communications, sur la base du profil dynamique enregistré du client.

19. Carte à puce selon la revendication précédente, **caractérisée en ce qu'**elle présente les particularités supplémentaires suivantes :
une troisième zone de mémoire (103) qui enregistre une somme d'argent payée d'avance,
des moyens (100) permettant de débiter ou de recharger la somme d'argent,
des moyens (100) permettant de débiter la somme correspondant à de nouvelles communications, déterminée à partir du profil dynamique enregistré du client, directement de la troisième zone de mémoire.

20. Carte à puce selon la revendication 18, **caractérisée en ce que** la somme correspondant à de nouvelles communications est déterminée à partir d'un profil dynamique statistique d'ensemble du client qui est enregistré dans une deuxième zone de mémoire (102), établi à partir d'une ou plusieurs variables aléatoires de communications antérieures d'au moins un groupe de clients, le profil d'ensemble enregistré du client étant adapté de manière dynamique.

21. Carte à puce selon la revendication 18, **caractérisée en ce que** les variables aléatoires qui sont utilisées pour établir le profil du client incluent la durée des communications, l'heure, le jour de la semaine ou les particularités géographiques de communications antérieures, ou les unes et les autres.

22. Carte à puce selon la revendication 18, **caractérisée en ce que** les montants correspondant à de nouvelles communications sont fonction de la charge statistique du système déterminée à partir du profil d'ensemble du client.

23. Système de facturation destiné à déterminer des redevances d'utilisation d'un réseau de télécommunications et comprenant :
une première zone de mémoire (101) qui enregistre, au moins pour un client du réseau de télécommunications, un profil dynamique du client établi sur la base d'une ou plusieurs variables aléatoires de communications antérieures du client,
des moyens servant à déterminer une ou plusieurs variables aléatoires pour chaque communication nouvelle,
des moyens (100) servant à calculer à nouveau le profil dynamique du client en fonction de la ou des variables aléatoires déterminées,
des moyens (100) servant à déterminer, à partir du profil dynamique enregistré du client, la redevance d'utilisation et à la facturer au client.

24. Système de facturation selon la revendication 23, **caractérisé en ce que** la redevance d'utilisation est déterminée à partir du profil dynamique statistique d'ensemble du client enregistré dans une deuxième zone de mémoire (102), et qui est établi sur la base d'une ou plusieurs variables aléatoires de communications antérieures d'au moins un groupe de clients, le profil d'ensemble enregistré du client étant adapté de façon dynamique.

25. Système de facturation selon la revendication 23, **caractérisé en ce que** les variables aléatoires qui sont utilisées pour établir le profil du client incluent la durée des communications, l'heure, le jour de la semaine ou les particularités géographiques de communications antérieures, ou les unes et les autres.

26. Système de facturation selon la revendication 23, **caractérisé en ce que** la redevance d'utilisation est fonction de la charge statistique du système obtenue à partir du profil d'ensemble du client.

27. Support de données programmé avec un programme d'ordinateur et pouvant être utilisé pour commander un dispositif programmable (100), qui comporte :
des moyens permettant d'enregistrer dans une première zone de mémoire (101), au moins pour un client d'un réseau de télécommunications, un profil dynamique du client établi sur la base d'une ou plusieurs variables aléatoires de communications antérieures du client du réseau numérique de télécommunications,
des moyens servant à déterminer une ou plusieurs propriétés statistiques à chaque nouvelle communication,
des moyens servant à établir à nouveau le profil dynamique du client en fonction de la ou des variables aléatoires déterminées,
des moyens servant à déterminer une redevance d'utilisation à partir du profil dynamique enregistré du client.

28. Support de données selon la revendication précédente, **caractérisé en ce que** la redevance d'utilisation est établie à partir d'un profil dynamique statistique d'ensemble du client, enregistré dans une deuxième zone de mémoire (102), qui est établi à partir d'une ou plusieurs variables aléatoires de communications antérieures d'au moins un groupe de clients, le profil d'ensemble du client qui est enregistré étant adapté de manière dynamique.

29. Support de données selon la revendication 27, **caractérisé en ce que** les variables aléatoires qui sont utilisées pour calculer le profil du client incluent la durée des communications, l'heure, le jour de la semaine ou les particularités géographiques de communications antérieures, ou les unes et les autres.

30. Support de données selon la revendication 27, **caractérisé en ce que** les montants correspondant aux nouvelles communications sont fonction de la charge statistique du système établie à partir du profil d'ensemble du client.
